# EUROPEAN PATENT SPECIFICATION

(11) **EP 1 411 420 B1**
(45) Date of publication and mention of the grant of the patent: **12.12.2007**
(21) Application number: 02022897.9
(22) Date of filing: 14.10.2002
(51) Int. Cl.: G06F 3/033

(54) **Method for detecting touch-point coordinate for use in a resistive touch panel**
Verfahren zur Detektion von Koordinaten des Tastpunktes zur Verwendung mit einem berührungsempfindlichen Widerstandbildschirm
Méthode de détermination de coordonnées du point de contact pour utilisation dans un écran tactil résistif

(43) Date of publication of application: 21.04.2004
(73) Proprietor: High Tech Computer Corp., Taoyuan (TW)
(72) Inventor: Wei-Chih, Chang, Taiwan 116 (TW); Yuan-Jie, Shiang, Banchiau City, Taipei, Taiwan 220 (TW); Shu-Hung, Tseng, Taiwan 110 (TW); Chang-Mien, Yang, Banchiau City, Taipei, Taiwan 220 (TW)
(74) Representative: Weber, Joachim

(56) References cited:
- EP-A- 0 309 946
- US-A- 5 453 941
- US-A- 5 659 154
- US-A1- 2002 101 407

## Description

### BACKGROUND OF THE INVENTION

### Field of the Invention

The invention relates in general to a touch panel, and more particularly to a method for detecting touch-point coordinate for use in a resistive touch panel.

### Description of the Related Art

The Personal Digital Assistance (PDA) becomes more and more popular than the conventional notebook due to its portability and multi-function.

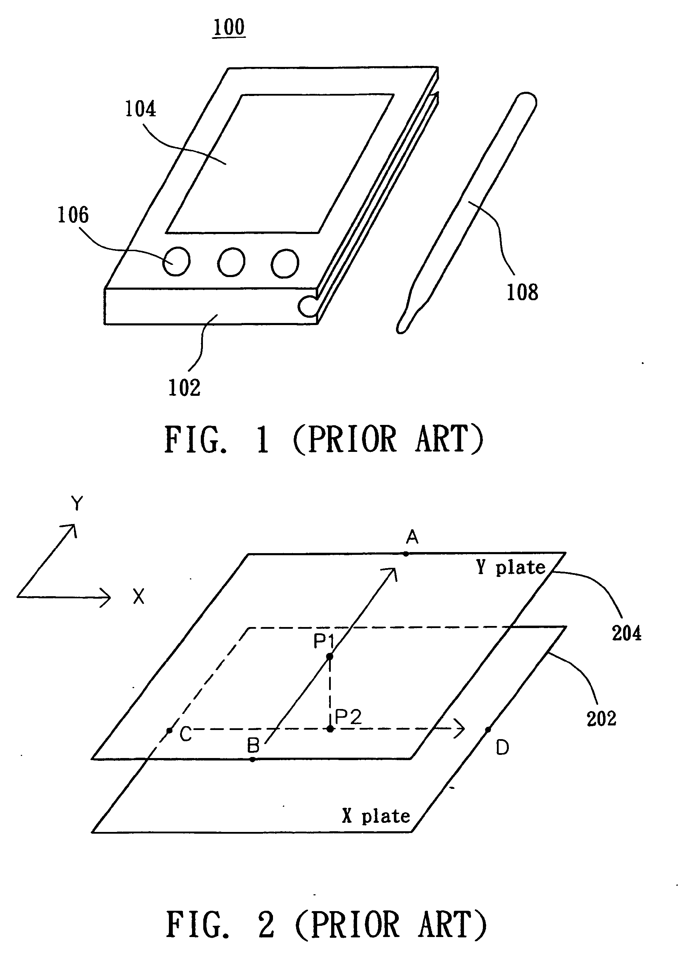

A typical PDA 100 is shown in FIG. 1. The PDA 100 includes a base 102, a touch panel 104, a control switch 106, and a stylus 108, wherein the touch panel 104 is positioned on the top surface of the base 102. The user can operate the PDA 100 by touching the touch panel 104 with stylus 108.

The touch panels can be categorized into two types: capacitive type and resistive type. FIG. 2 illustrates a resistive touch panel formed with an X plate 202 and a Y plate 204 being disposed apart. Both the X plate 202 and the Y plate 204 are plane resistors and are not in contact with each other if no external force is exerted on the touch panel. As the user points the stylus to the touch panel, the point P1 of the X plate 202 is attached to point P2 of the Y plate 204, wherein the touched point on the touch panel corresponds to the point P1 on the X plate 202 and the point P2 on the Y plate.

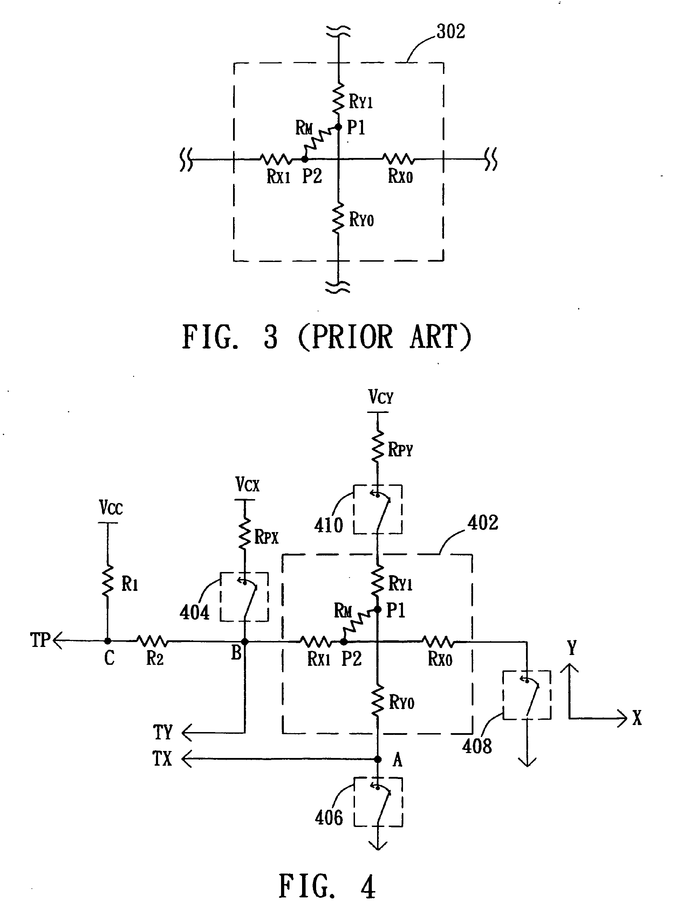

Please refer to FIG. 3; it shows the equivalent circuit of the resistive touch panel, wherein the equivalent resistor R_{M} is produced between the X plate and the Y plate. When no external force is exerted on the touch panel, an open circuit is formed between the X plate and the Y plate, and the resistance of the equivalent resistor R_{M} is infinity. When the X plate is attached to the Y plate by an external force, a loop is formed across the X plate and the Y plate, and the equivalent resistor R_{M} is much smaller than infinity, wherein the equivalent resistor R_{M} relates to the magnitude of the external force. Moreover, equivalent resistors Rₓₒ and Rₓ₁ on the X plate are coupled to the point P2, wherein the magnitude of the Rₓₒ and Rₓ₁ are determined by the X-coordinate of the point P2, not the Y-coordinate of the point P2. Likewise, the two equivalent resistor R_{yo} and R_{y1} on the Y plate are coupled to the point P1, wherein the magnitude of the R_{yo} and R_{y1} are determined by the Y-coordinate of the point P1, not the X-coordinate of the point P2.
A similar pressure sensitive resistive tablet system is disclosed in US 5,659,154.

Generally, a touch-point detecting apparatus is employed to determine the coordinates of the touched point on the touch panel. If the stylus touches the touch panel too lightly, the contact status between the Y plate and the X plate will be unstable, and the corresponding equivalent resistor R_{M} will be different with that resulting from normally pressed. In this case, the detection result is in error and accordingly may cause the PDA to operate in wrong status.

### SUMMARY OF THE INVENTION

It is therefore an object of the invention to provide a touch-point detecting method, applicable to a resistive touch panel, to solve the problem that the coordinate of the touch-point detected by the touch-point detecting apparatus can be wrong when an external force given to the stylus for touching the touch panel is exerted too lightly to be identified.

This object is solved by a method for detecting touch-point coordinate according to independent claim 1. The dependent claims pertain to preferred embodiments thereon Therefore a touch-point detecting method is disclosed, wherein the touch-point detecting apparatus comprises a plurality of switches and a plurality of external resistors, and is coupled to two power supplies and two touch-panel resistors of the touch panel. The two power supplies are used for respectively applying constant voltages to two touch-panel resistors. By selectively enabling and disabling the switches, the touch-point detecting method comprises the steps of: determining whether an external force is exerted on the resistive touch panel according to a pressure detection signal, if so, proceeding to the next step; determining whether the external force is effective according to a first signal and a second signal that are produced by a comparing process, if so, proceeding with the next step; producing a first coordinate signal by performing first-coordinate detecting of a touch point at which the external force is exerted on the resistive touch panel, wherein the first coordinate signal indicates a first coordinate of the touch point; producing a second coordinate signal by performing second-coordinate detecting of the touch point at which the external force is exerted on the resistive touch panel, wherein the second coordinate signal indicates a second coordinate of the touch point.

### BRIEF DESCRIPTION OF THE DRAWINGS

Other objects, features, and advantages of the invention will become apparent from the following detailed description of the preferred but non-limiting embodiments. The description is made with reference to the accompanying drawings.

FIG. 1 shows a PDA.

FIG. 2 illustrates the structure of a typical resistive touch panel.

FIG. 3 shows the equivalent circuit of the resistive touch panel, wherein the equivalent resistor R_{M} is produced between the X plate and the Y plate.

FIG. 4 shows the equivalent circuit of the touch-point detecting apparatus for the resistive touch panel according to the preferred embodiment of the present invention.

FIG. 5 shows the equivalent circuit of the touch-point detecting apparatus during the step of determining whether an external force is exerted on the touch panel.

FIG. 6 shows the equivalent circuit of the touch-point position-test apparatus during the step of determining whether the external force is effective external force.

FIG. 7A shows the equivalent circuit of the touch-point detecting apparatus during the step of detecting X-coordinate of the touch point.

FIG. 7B shows the equivalent circuit of the touch-point detecting apparatus during the step of detecting Y-coordinate of the touch point.

FIG. 8 shows the flow chart of the preferred embodiment for the touch-point detecting method.

FIG. 9 shows the equivalent circuit of another touch-point detecting apparatus, wherein the configuration are almost the same as that in FIG. 4, except signals from the touch-point detecting apparatus pass through nodes C, D, and E.

### DESCRIPTION OF THE PREFERRED EMBODIMENT

FIG. 4 shows an equivalent circuit of a touch-point location detecting apparatus for a resistive touch panel 402 according to the preferred embodiment of the present invention. In FIG. 4, nodes A, B, C are used as the output terminals of the touch-point detecting apparatus. These nodes can be connected to the post-stage signal processing apparatus, for example. The touch-point detecting apparatus is coupled to the external power supplies V_{CX}, V_{CY} and the resistive touch panel 402, and comprises switches 404, 406, 408, 410, and external resistors R_{PX}, R_{PY}, R₁, and R₂, wherein switches 404, 408 are coupled to the X plate, switches 406, 410 are coupled to the Y plate, and switches 404, 410 are respectively coupled to the external resistors R_{PX}, R_{PY}. The external powers V_{CX}, V_{CY} are, respectively, coupled to the external resistors R_{PX}, R_{PY} for supplying constant voltage to the X plate and the Y plate. The external resistor R₂ is coupled to the external resistor R₁ and one of the X plate and the Y plate. In this embodiment, the external resistor R₂ is coupled to the X plate.

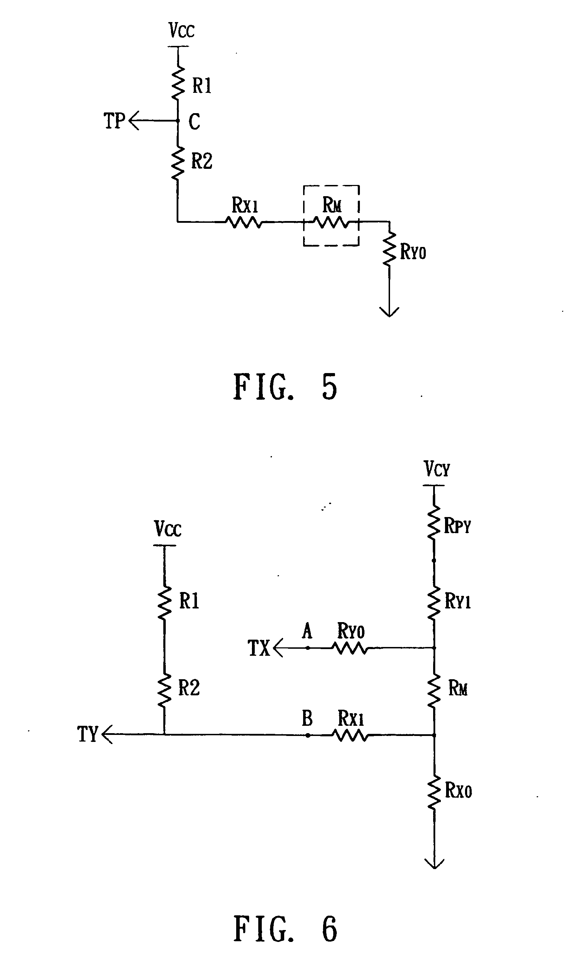

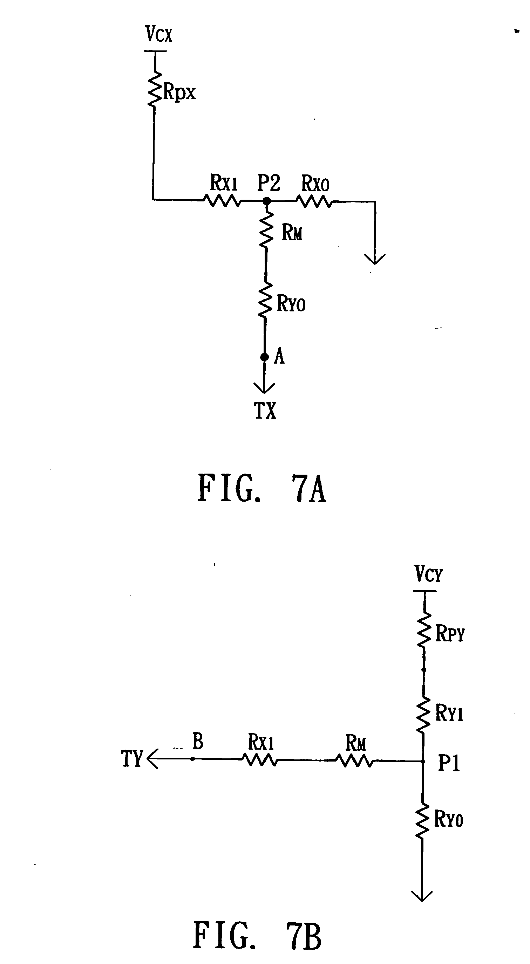

In the present invention, the touch-point location detecting method comprises four steps: determining whether an external force is exerted on the touch panel 402, determining whether the external force is effective external force, detecting X-coordinate of the touch point, and detecting Y-coordinate of the touch point. The equivalent circuits, corresponding to the four steps, are respectively shown in FIG. 5, FIG, 6, FIG. 7A, and FIG. 7B.

FIG. 5 illustrates the equivalent circuit of the touch-point apparatus during the step of determining whether an external force is exerted on the touch panel 402, wherein switch 406 is enabled and switches 404, 408, 410 are disabled. As the X plate and Y plate are not in contact with each other, the voltage Vc at the node C will be equal to Vcc, corresponding to a logic HIGH, owing to the resistance of the equivalent resistor R_{M} across the two plates being infinite. When the X plate is in contact with Y plate, the voltage signal TP at the node C will be much lower than Vcc, corresponding to a logic LOW, due to the formation of the loop across the X and Y planes with the finite equivalent resistor R_{M} produced in the contact thereof. Therefore, a detecting as to whether an external force is exerted on the touch panel can be made according to the voltage signal TP.

FIG. 6 illustrates the equivalent circuit of the touch-point detecting apparatus during the step of determining whether the external force is effective external force, wherein switches 408, 410 are enabled and switches 404, 406 are disabled. The voltage signals TX, TY are outputted from nodes A and B, respectively. If an external force is normally exerted on the touch panel, the resistance of the equivalent resistor R_{M} and the difference between the voltage signals TX and TY will be much smaller than those resulting from no external force. If an external force is lightly exerted on the touch panel 402, the resistance of the equivalent resistor R_{M} and the voltage difference will be larger than those resulting from a normal external force and smaller than those resulting from no external force.

When determining whether the external force is effective external force, the voltage difference between the voltage signals TX and TY is compared with the pre-determined threshold value of the voltage difference so as to determine whether the external force is effective. The external force will be determined as an effective external force if the voltage difference between the voltage signals TX and TY is smaller than the pre-determined threshold value. Conversely, the external force will not be regarded as an effective external force to indicate instructions if the voltage difference between the voltage signals TX and TY is larger than the pre-determined threshold. In this case, the touch-point detecting apparatus ends the touch-point detecting method, which can avoid any erroneous operation and erroneous display resulting from error voltage signals TX or TY.

FIG. 7A illustrates the equivalent circuit of the touch-point detecting apparatus during the step of detecting the X-coordinate of the touch point, wherein switches 404, 408 are enabled and switches 406, 410 are disabled. The voltage V_{A} at node A relates to the ratio of equivalent resistor R_{X0} to equivalent resistor R_{X1} on the X plate, wherein the ratio is determined by the X-coordinate. Therefore, the voltage signal TX at the node A indicates the X-coordinate of a touch point on which the external force is exerted.

Please refer to FIG. 7B, it shows the equivalent circuit of the touch-point detecting apparatus during the step of detecting the Y-coordinate of the touch point, wherein switches 406, 410 are enabled and switches 404, 408 are disabled. The voltage V_{B} on node B is related with the ratio of equivalent resistor R_{Y0} to equivalent resistor R_{Y1} on the Y plate, wherein the ratio is determined by the Y-coordinate. Therefore, the voltage signal TY outputted from the node B indicates the Y-coordinate, on which the external force is imposed on the touch panel 402.

It should be noted that the touch-point detecting method is not limited to implementing the step of detecting X-coordinate first and then the step of detecting Y-coordinate. To interchange these two steps is also applicable in the present invention. Moreover, the step of determining whether the external force is effective external force can also be implemented between the steps of detecting X-coordinate and detecting Y-coordinate again and after the two coordination-drawing steps. Besides, The pressure comparison step for determining whether the external force is effective external force can be implemented for three times, between which other steps of the present method can be implemented. In the present invention, all embodiments of the touch-point detecting method comprises the sequences of CXY (CYX), XCY (YCX), XYC (YXC), CXCY (CYCX), CXYC (CYXC), XCYC (YCXC), CXCYC (CYCXC), wherein the C, X and Y represent the steps of determining whether the external force is effective external force, detecting X-coordinate of the touch point, and detecting Y-coordinate of the touch point respectively.

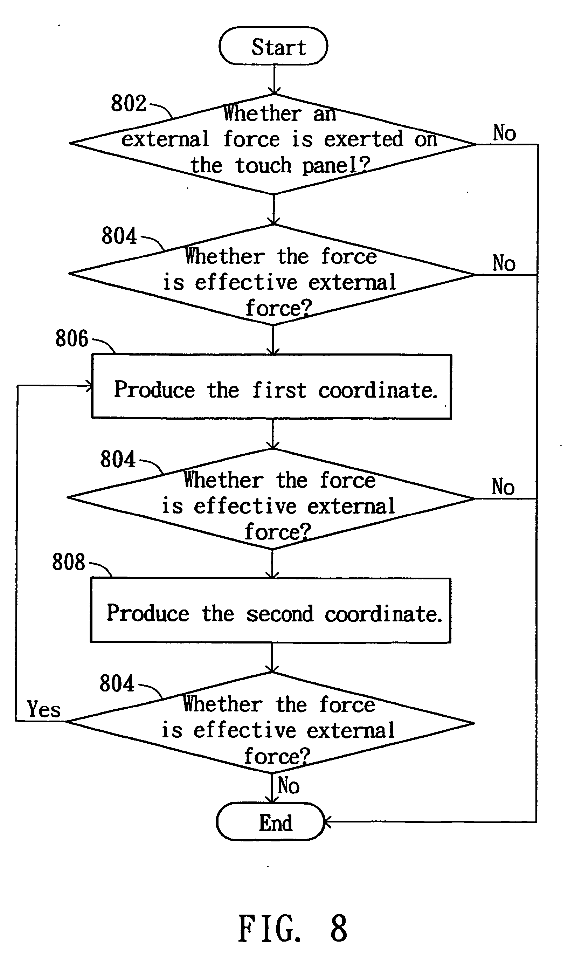

Please refer to FIG. 8, it shows the flow chart of the preferred embodiment for the touch-point detecting method. Firstly, in step 802 of pressure detection, the touch-point detecting apparatus determines whether an external force is exerted on the touch panel. If not, the method is finished. If so, then the step 804 is executed. In step 804, whether the external force is effective external force. Next, producing a first coordinate and producing a second coordinate are respectively executed in step 806 and step 808, wherein the first coordinate can be X-coordinate or Y-coordinate. Please note that the step 804 of pressure comparison is executed between step 806 and step 808 again, and after the step 808.

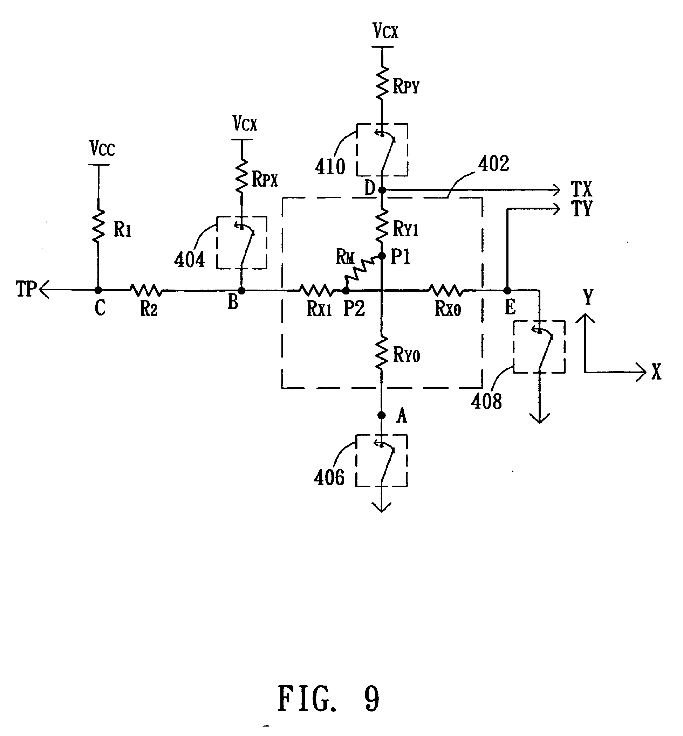

FIG. 9 is an equivalent circuit of another touch-point detecting apparatus with a resistive touch panel, according to the invention. The configuration of this touch-point detecting apparatus in FIG. 9 is almost the same as that in FIG. 4, except that output signals of this example are provided through nodes C, D, and E. In the step of determining whether the external force is effective external force, the difference of the voltage signals outputted from the node D and node E, by enabling switches 404, 406, and disabling switches 408, 410, is compared with the a predetermined threshold value to determine if the external force is effective or not. In the step of detecting X-coordinate of the touch point, the voltage signal TX is outputted from node D by enabling switch 404, 408 and disabling switch 406, 410. During the step of detecting Y coordinate of the touch point, the voltage signal TY is outputted from node E by enabling switch 406, 410 and disabling switch 404, 408. The remaining step is the same as the previous embodiment.

In the present invention, the position, which an external force is exerted on the resistive touch panel, is detected by selectively enabling switches of the touch-point detecting apparatus. The present invention will determine whether an external force is exerted on the touch panel and further check if the external force is effective or not. The touch-point detecting method of the present invention can solve the problem that no bright point appears on the display or the bright point appears on the wrong position when the external force is too small.

While the invention has been described by way of example and in terms of the preferred embodiment, it is to be understood that the invention is not limited to the disclosed embodiment. On the contrary, it is intended to cover various modifications and similar arrangements and procedures, and the scope of the appended claims therefore should be accorded the broadest interpretation so as to encompass all such modifications and similar arrangements and procedures.

## Claims

1. A method for detecting touch-point coordinate, applicable to a touch-point detecting apparatus for a resistive touch panel (402), wherein
said resistive touch panel (402) includes a first touch-panel resistor (R_{X}) and a second touch-panel resistor (R_{Y}),
said touch-point detecting apparatus comprising a first switch (404), a second switch (408), a third switch (410), a fourth switch (406), a first external resistor (R_{PX}), a second external resistor (R_{PY}), a third external resistor (R₁), and a fourth external resistor (R₂),wherein said third external resistor (R₁) is coupled to a power supply (V_{CC}), said third external resistor (R₁) and a first end of said fourth external resistor (R₂) are coupled at a first node (C), said first switch (404) and said first touch-panel resistor (R_{X}) are coupled to a second end of said fourth external resistor (R₂) at a second node (B), said first switch (404) and said second switch (408) are coupled to said first touch-panel resistor (R_{X}), said second switch (408) is coupled to said first touch-panel resistor at a third node (E), said third switch (410) and said fourth switch (406) are coupled to said second touch-panel resistor (R_{Y}) at a fourth node (D) and a fifth node (A), respectively, said first external resistor (R_{PX}) and said second external resistor (R_{PY}) are coupled to said first power supply (V_{CX}) and said second power supply (V_{CY}), respectively, and are coupled to said first switch (404) and said third switch (410), respectively, and
said first power supply (V_{CX}) and said second power supply (V_{CY}) are used for respectively applying constant voltages to said first touch-panel resistor (R_{PX}) and said second touch-panel resistor (R_{PY}),
said method comprising the steps of:
detecting pressure for determining whether there is an external force exerted on the resistive touch panel (402) according to a pressure detection signal (TP) produced by performing pressure detection for the resistive touch panel (402), and comprising the steps of:
enabling said fourth switch (406) and disabling said first switch (404), said third switch (410), and said second switch (408); and
outputting said pressure detection signal (TP) through said first node (C); if so, proceeding to the next step;
comparing pressure for determining whether said external force is effective by enabling said first switch (404) and said fourth switch (406),
disabling said second switch (408) and said third switch (410),
producing said first coordinate signal (TX) and said second coordinate signal (TY) respectively through said third node (E) and said fourth node (D), and
comparing the difference between said first coordinate signal (TX) and said second coordinate signal (TY) with a predetermined threshold value, or by
outputting said first coordinate signal (TX) and said second coordinate signal (TY) respectively through said fifth node (A) and said second node (B) by enabling said second switch (408) and said third switch (410) and by disabling said first switch (404) and said fourth switch (406), wherein the difference between said first coordinate signal (TX) and said second coordinate signal (TY) is compared with a predetermined threshold value;
detecting a first coordinate (X) by performing first-coordinate detecting of a touch point at which the external force is exerted on the resistive touch panel (402), wherein a first coordinate signal (TX) indicates a first coordinate (X) of said touch point, wherein said first coordinate detecting step, comprises the steps of:
enabling said first switch (404) and said second switch (408),
disabling said third switch (410) and said fourth switch (406), and
outputting said first coordinate signal (TX) at either said fourth node (D) or said fifth node (A); and
detecting a second coordinate (Y) by performing second-coordinate detecting of said touch point at which the external force is exerted on the resistive touch panel (402), wherein a second coordinate signal (TY) indicates a second coordinate (Y) of said touch point, wherein said second-coordinate detecting step can be executed by enabling said third switch (410) and said fourth switch (406), and by disabling said first switch (404) and said second switch (408), and said second coordination signal (TY) is outputted through either said second node (B) or said third node (E).

2. A method according to claim 1, wherein said first coordinate signal (TX) is determined by the relative position between said touched point and said first touch-panel resistor (R_{X}), said second coordinate signal (TY) is determined by the relative position between said touch point and said second touch-panel resistor (R_{Y}).

3. A method according to claim 1, further comprising said comparing pressure step between said detecting a first coordinate (X) step and said detecting a second coordinate (Y) step.

4. A method according to claim 1, further comprising said comparing pressure step after said detecting a second coordinate (Y) step.

5. A method according to claim 1, further comprising said comparing pressure step before said detecting a second coordinate (Y) step.

6. A method according to claim 1, further comprising said comparing pressure step after said detecting a first coordinate (X) step.

7. A method according to claim 1, further comprising said comparing pressure step before said detecting a first coordinate (X) step.

8. A method according to claim 1, wherein said detecting a first coordinate step and said detecting a second coordinate step are respectively producing X coordinate step and producing Y coordinate step.

9. A method according to claim 1, wherein said detecting a first coordinate step and said detecting a second coordinate step are respectively producing Y coordinate step and producing X coordinate step.

## Patentansprüche

1. Verfahren zur Erfassung einer Tastpunktkoordinate, anwendbar bei einer Tastpunkt-Erfassungsvorrichtung für ein berührungsempfindliches Widerstands-Eingabefeld, Widerstands-Touch-Panel, (402), wobei
das berührungsempfindliche Widerstands-Eingabefeld (402) einen ersten Touch-Panel-Widerstand (R_{X}) und einen zweiten Touch-Panel-Widerstand (R_{Y}) umfasst,
wobei die Tastpunkt-Erfassungsvorrichtung einen ersten Schalter (404), einen zweiten Schalter (408), einen dritten Schalter (410), einen vierten Schalter (406), einen ersten externen Widerstand (R_{PX}), einen zweiten externen Widerstand (R_{PY}), einen dritten externen Widerstand (R₁), und einen vierten externen Widerstand (R₂) umfasst, wobei der dritte externe Widerstand (R₁) mit einer Versorgungsspannung (V_{CC}) verbunden ist, der dritte externe Widerstand (R₁) und ein erster Anschluss des vierten externen Widerstands (R₂) mit einem ersten Knoten (C) verbunden sind, der erste Schalter (404) und der erste Touch-Panel-Widerstand (R_{X}) an einem zweiten Knoten (B) mit einem zweiten Anschluss des vierten externen Widerstands (R₂) verbunden sind, der erste Schalter (404) und der zweite Schalter (408) mit dem ersten Touch-Panel-Widerstand (R_{X}) verbunden sind, der zweite Schalter (408) an einem dritten Knoten (E) mit dem ersten Touch-Panel-Widerstand verbunden ist, der dritte Schalter (410) und der vierte Schalter (406) jeweils an einem vierten Knoten (D) und einem fünften Knoten (A) mit dem zweiten Touch-Panel-Widerstand (R_{Y}) verbunden sind, der erste externe Widerstand (R_{PX}) und der zweite externe Widerstand (R_{PY}) jeweils mit der ersten Versorgungsspannung (V_{CX}) und der zweiten Versorgungsspannung (V_{CY}) und jeweils mit dem ersten Schalter (404) und dem dritten Schalter (410) verbunden sind; und
die erste Versorgungsspannung (V_{CX}) und die zweite Versorgungsspannung (V_{CY}) verwendet werden, um jeweils konstante Spannungen an dem ersten Touch-Panel-Widerstand (R_{PX}) und dem zweiten Touch-Panel-Widerstand (R_{PY}) anzulegen,
wobei das Verfahren die Schritte umfasst:
Erfassen eines Drucks gemäß einem Druckerfassungssignal (TP), das mittels Durchführung einer Druckerfassung für das berührungsempfindliche Widerstands-Eingabefeld (402) erzeugt wird, um zu bestimmen, ob eine externe Kraft auf das berührungsempfindliche Widerstands-Eingabefeld (402) ausgeübt wird, und umfassend die Schritte:
Aktivieren des vierten Schalters (406) und Deaktivieren des ersten Schalters (404), des dritten Schalters (410) und des zweiten Schalters (408); und
Ausgeben des Druckerfassungssignals (TP) über den ersten Knoten (C); wenn dies geschieht, Fortschreiten zum nächsten Schritt;
Vergleichen eines Drucks zum Bestimmen, ob die externe Kraft wirksam ist, durch Aktivieren des ersten Schalters (404) und des vierten Schalters (406);
Deaktivieren des zweiten Schalters (408) und des dritten Schalters (410);
Erzeugen des ersten Koordinatensignals (TX) und des zweiten Koordinatensignals (TY) jeweils über den dritten Knoten (E) und den vierten Knoten (D), und
Vergleichen des Unterschieds zwischen dem ersten Koordinatensignal (TX) und dem zweiten Koordinatensignal (TY) mit einem vorbestimmten Schwellenwert, oder durch Ausgeben des ersten Koordinatensignals (TX) und des zweiten Koordinatensignals (TY) jeweils über den fünften Knoten (A) und den zweiten Knoten (B) durch Aktivieren des zweiten Schalters (408) und des dritten Schalters (410) und durch Deaktivieren des ersten Schalters (404) und des vierten Schalters (406), wobei der Unterschied zwischen dem ersten Koordinatensignal (TX) und dem zweiten Koordinatensignal (TY) mit einem vorbestimmten Schwellenwert verglichen wird;
Erfassen einer ersten Koordinate (X) durch Durchführen einer Erfassung der ersten Koordinate eines Tastpunkts, an dem die externe Kraft auf das berührungsempfindliche Widerstands-Eingabefeld (402) ausgeübt wird, wobei ein erstes Koordinatensignal (TX) eine erste Koordinate (X) des Tastpunktes anzeigt, wobei der Schritt der Erfassung der ersten Koordinate die Schritte umfasst:
Aktivieren des ersten Schalters (404) und des zweiten Schalters (408),
Deaktivieren des dritten Schalters (410) und des vierten Schalters (406), und
Ausgeben des ersten Koordinatensignals (TX) entweder am vierten Knoten (D) oder am fünften Knoten (A); und
Erfassen einer zweiten Koordinate (Y) durch Durchführung einer Erfassung der zweiten Koordinate des Tastpunktes, an dem die externe Kraft auf das berührungsempfindliche Widerstands-Eingabefeld (402) ausgeübt wird, wobei ein zweites Koordinatensignal (TY) eine zweite Koordinate (Y) des Tastpunktes anzeigt, wobei der Schritt der Erfassung der zweiten Koordinate durchgeführt werden kann, indem der dritte Schalter (410) und der vierte Schalter (406) aktiviert werden, und der erste Schalter (404) und der zweite Schalter (408) deaktiviert werden, und das zweite Koordinatensignal (TY) entweder über den zweiten Knoten (B) oder den dritten Knoten (E) ausgegeben wird.

2. Verfahren nach Anspruch 1, wobei das erste Koordinatensignal (TX) durch die relative Position zwischen Tastpunkt und dem ersten Touch-Panel-Widerstand (R_{X}) bestimmt wird, wobei das zweite Koordinatensignal (TY) durch die relative Position zwischen dem Tastpunkt und dem zweiten Touch-Panel-Widerstand (R_{Y}) bestimmt wird.

3. Verfahren nach Anspruch 1, ferner umfassend den Schritt des Druckvergleichs zwischen dem Schritt des Erfassens einer ersten Koordinate (X) und dem Schritt des Erfassens einer zweiten Koordinate (Y).

4. Verfahren nach Anspruch 1, ferner umfassend den Schritt des Druckvergleichs nach dem Schritt des Erfassens einer zweiten Koordinate (Y).

5. Verfahren nach Anspruch 1, ferner umfassend den Schritt des Druckvergleichs vor dem Schritt des Erfassens einer zweiten Koordinate (Y).

6. Verfahren nach Anspruch 1, ferner umfassend den Schritt des Druckvergleichs nach dem Schritt des Erfassens einer ersten Koordinate (X).

7. Verfahren nach Anspruch 1, ferner umfassend den Schritt des Druckvergleichs vor dem Schritt des Erfassens einer ersten Koordinate (X).

8. Verfahren nach Anspruch 1, wobei der Schritt des Erfassens einer ersten Koordinate und der Schritt des Erfassens einer zweiten Koordinate jeweils ein Schritt der Erstellung einer X-Koordinate und ein Schritt der Erstellung einer Y-Koordinate sind.

9. Verfahren nach Anspruch 1, wobei der Schritt des Erfassens einer ersten Koordinate und der Schritt des Erfassens einer zweiten Koordinate jeweils ein Schritt der Erstellung einer Y-Koordinate und ein Schritt der Erstellung einer X-Koordinate sind.

## Revendications

1. Procédé de détection d'une coordonnée de point de contact, applicable à un dispositif de détection de point de contact pour un écran tactile résistif (402), dans lequel
ledit écran tactile résistif (402) comprend une première résistance d'écran tactile (R_{X}) et une deuxième résistance d'écran tactile (R_{Y}),
ledit dispositif de détection de point de contact comprenant un premier interrupteur (404), un deuxième interrupteur (408), un troisième interrupteur (410), un quatrième interrupteur (406), une première résistance externe (R_{PX}), une deuxième résistance externe (R_{PY}), une troisième résistance externe (R₁) et une quatrième résistance externe (R₂), ladite troisième résistance externe (R₁) étant couplée à une alimentation électrique (V_{CC}), ladite troisième résistance externe (R₁) et une première extrémité de ladite quatrième résistance externe (R₂) étant couplées en un premier noeud (C), ledit premier interrupteur (404) et ladite première résistance d'écran tactile (R_{X}) étant couplés à une deuxième extrémité de ladite quatrième résistance externe (R₂) en un deuxième noeud (B), ledit premier interrupteur (404) et ledit deuxième interrupteur (408) sont couplés à ladite première résistance d'écran tactile (R_{X}), ledit deuxième interrupteur (408) est couplé à ladite première résistance d'écran tactile en un troisième noeud (E), ledit troisième interrupteur (410) et ledit quatrième interrupteur (406) sont couplés à ladite deuxième résistance d'écran tactile (R_{Y}) en un quatrième noeud (D) et un cinquième noeud (A), respectivement, ladite première résistance externe (R_{PX}) et ladite deuxième résistance externe (R_{PY}) sont couplées à ladite première alimentation électrique (V_{CX}) et à ladite deuxième alimentation électrique (V_{CY}), respectivement, et sont couplées audit premier interrupteur (404) et audit troisième interrupteur (410), respectivement, et
ladite première alimentation électrique (V_{CX}) et ladite deuxième alimentation électrique (V_{CY}) sont utilisées pour appliquer respectivement des tensions constantes à ladite première résistance d'écran tactile (R_{PX}) et à ladite deuxième résistance d'écran tactile (R_{PY}),
ledit procédé comprenant les étapes consistant à:
détecter une pression pour déterminer si une force extérieure est exercée sur l'écran tactile résistif (402) selon un signal de détection de pression (TP) produit en effectuant une détection de pression pour l'écran tactile résistif (402), et comprenant les étapes consistant à :
valider ledit quatrième interrupteur (406) et invalider ledit premier interrupteur (404), ledit troisième interrupteur (410) et ledit deuxième interrupteur (408) ; et
fournir ledit signal de détection de pression (TP) par ledit premier noeud (C) ; le cas échéant, passer à l'étape suivante ;
comparer la pression pour déterminer si ladite force extérieure est effective en validant ledit premier interrupteur (404) et ledit quatrième interrupteur (406),
invalider ledit deuxième interrupteur (408) et ledit troisième interrupteur (410),
produire ledit premier signal de coordonnée (TX) et ledit deuxième signal de coordonnée (TY) respectivement par ledit troisième noeud (E) et ledit quatrième noeud (D), et
comparer la différence entre ledit premier signal de coordonnée (TX) et ledit deuxième signal de coordonnée (TY) avec une valeur de seuil prédéterminée, ou
en fournissant ledit premier signal de coordonnée (TX) et ledit deuxième signal de coordonnée (TY) respectivement par ledit cinquième noeud (A) et ledit deuxième noeud (B) en validant ledit deuxième interrupteur (408) et ledit troisième interrupteur (410) et en invalidant ledit premier interrupteur (404) et ledit quatrième interrupteur (406), où la différence entre ledit premier signal de coordonnée (TX) et ledit deuxième signal de coordonnée (TY) est comparée à une valeur de seuil prédéterminée ;
détecter une première coordonnée (X) en effectuant une détection de première coordonnée d'un point de contact en lequel est exercée la force extérieure sur l'écran tactile résistif (402), où un premier signal de coordonnée (TX) indique une première coordonnée (X) dudit point de contact, ladite étape de détection de première coordonnée comprenant les étapes consistant à :
valider ledit premier interrupteur (404) et ledit deuxième interrupteur (408),
invalider ledit troisième interrupteur (410) et ledit quatrième interrupteur (406), et
fournir ledit premier signal de coordonnée (TX) soit au quatrième noeud (D) soit au cinquième noeud (A) ; et
détecter une deuxième coordonnée (Y) en effectuant une détection de deuxième coordonnée dudit point de contact en lequel la force extérieure est exercée sur l'écran tactile résistif (402), où un deuxième signal de coordonnée (TY) indique une deuxième coordonnée (Y) dudit point de contact, où ladite étape de détection de deuxième coordonnée peut être exécutée en validant ledit troisième interrupteur (410) et ledit quatrième interrupteur (406), et en invalidant ledit premier interrupteur (404) et ledit deuxième interrupteur (408), et ledit deuxième signal de coordonnée (TY) est fourni soit au deuxième noeud (B) soit au troisième noeud (E).

2. Procédé selon la revendication 1, dans lequel ledit premier signal de coordonnée (TX) est déterminé par la position relative entre ledit point touché et ladite première résistance d'écran tactile (R_{X}), ledit deuxième signal de coordonnée (TY) est déterminé par la position relative entre ledit point de contact et ladite deuxième résistance d'écran tactile (R_{Y})_{.}

3. Procédé selon la revendication 1, comprenant en outre ladite étape de comparaison de pression entre ladite étape de détection d'une première coordonnée (X) et ladite étape de détection d'une deuxième coordonnée (Y).

4. Procédé selon la revendication 1, comprenant en outre ladite étape de comparaison de pression après ladite étape de détection d'une deuxième coordonnée (Y).

5. Procédé selon la revendication 1, comprenant en outre ladite étape de comparaison de pression avant ladite étape de détection d'une deuxième coordonnée (Y).

6. Procédé selon la revendication 1, comprenant en outre ladite étape de comparaison de pression après ladite étape de détection d'une première coordonnée (X).

7. Procédé selon la revendication 1, comprenant en outre ladite étape de comparaison de pression avant ladite étape de détection d'une première coordonnée (X).

8. Procédé selon la revendication 1, dans lequel ladite étape de détection d'une première coordonnée et ladite étape de détection d'une deuxième coordonnée sont respectivement une étape de production d'une coordonnée X et une étape de production d'une coordonnée Y.

9. Procédé selon la revendication 1, dans lequel ladite étape de détection d'une première coordonnée et ladite étape de détection d'une deuxième coordonnée sont respectivement une étape de production d'une coordonnée Y et une étape de production d'une coordonnée X.
